# EUROPÄISCHE PATENTSCHRIFT

(11) **EP 1 556 166 B1**
(45) Veröffentlichungstag und Bekanntmachung des Hinweises auf die Patenterteilung: **15.04.2009**
(21) Anmeldenummer: 03755121.5
(22) Anmeldetag: 23.05.2003
(51) Int. Cl.: B01L 3/00, C12N 13/00, G02B 21/26

(54) **ELEKTRISCHES MIKROFLUIDIK-MULTIPLEX-SYSTEM UND DESSEN VERWENDUNG**
ELECTRICAL MICROHYDRAULIC MULTIPLEX SYSTEM AND USE THEREOF
SYSTEME ELECTRIQUE MULTIPLEX ET MICROFLUIDIQUE ET SON UTILISATION

(30) Priorität: 24.05.2002 DE 10223127
(43) Veröffentlichungstag der Anmeldung: 27.07.2005
(73) Patentinhaber: Fraunhofer-Gesellschaft zur Förderung der angewandten Forschung e.V., 80686 München (DE)
(72) Erfinder: TANGEN, Uwe, Dr., 53639 Königswinter (DE); MAEKE, Thomas, 53229 Bonn (DE); MCCASKILL, John, Simpson, Dr., 53229 Bonn (DE); FÜCHSLIN, Ruedi, Dr., 53111 Bonn (DE); MATHIS, Harald, Dr., 53173 Bonn (DE)
(74) Vertreter: von Kreisler Selting Werner
(86) Internationale Anmeldenummer: PCT/EP2003/005418
(87) Internationale Veröffentlichungsnummer: WO 2003/100375

(56) Entgegenhaltungen:
- DE-A- 19 860 117
- US-A- 6 033 546
- US-A- 6 046 056

## Beschreibung

### Technisches Anwendungsgebiet

Die Erfindung beschreibt ein Gerät (engl. "Device") und mehrere Verfahren zur massiv parallelen elektrisch steuerbaren Verarbeitung von Molekülen (speziell Biopolymeren) in einem integrierten mikrostrukturierten Hybridbaustein (Kombination von Mikrofluidik und Mikroelektronik). Die Steuerung erfolgt über Elektroden durch die bekannte elektrophoretische Drift von Molekülen in einem elektrischen Feld. Diese Lenkung ist jedoch so gestaltet, dass die aktive Steuerung der Molekülbewegung in verschiedenen Einheiten (z.B. Kanälen) der Mikrofluidik hochparallel unabhängig voneinander erfolgen kann.

Damit eröffnen sich neue Wege bei Aufgabenstellungen mit hohem Probendurchsatz und/oder vielen wahlweise benutzten Verarbeitungsschritten. Anwendungsgebiete sind die Biochemie und Molekularbiologie, die molekulare Diagnostik, die Synthese und Analyse von neuen Wirkstoffen und die biomolekulare Informationsverarbeitung. Typische Anwendungen finden sich in der Pharma-Industrie, der Laborautomatisierung, der klinischen Diagnostik, der Verfahrens- und Umwelttechnik, der evolutiven Biotechnologie und der adaptiven Nanotechnologie.

### Stand der Technik, Nachteile des Standes der Technik

Die elektrische Transportsteuerung von Biomolekülen durch eine moderate Anzahl von Elektroden (<1000) gehört zum aktuellen Stand der Technik. Vor allem in der Elektrophorese (z.B. die Gelelektrophorese und die Kapillarelektrophorese) werden erheblich weniger Elektroden individuell und analog angesteuert, inklusive Spannungs- oder Stromüberwachung. In Mikrostrukturen begrenzt Elektrolyse durch Gasbildung den maximal einsetzbaren Potentialwert an den Elektroden. Der Einsatz von Gelen, wegen einer besseren Diskriminierung beim Transport, ist problematisch wegen begrenzter Wiederverwendbarkeit und Kreuzkontamination.

Die Wirkung von Elektroden auf den Transport von Biomolekülen ist wegen Abschirmung durch freie Ladungsträger in der Lösung stark beeinflusst. Legt man zwischen die Elektroden in einer Lösung ein elektrisches Feld an, so bildet sich in Gegenwart geladener Teilchen eine elektrische Doppelschicht aus, die je nach Teilchenart und -konzentration mehr oder weniger ausgedehnt und feststehend ist. Man unterscheidet zwischen starrer und diffuser Doppelschicht. Bei hoher Konzentration vor allem starker Elektrolyte kommt es zur starken Abschirmung der Elektroden und dadurch zu einer erheblich Verringerung des Feldes im Inneren der Lösung, so dass dessen Wirkung auf Teilchen (z.B. zum Zwecke des Transports derselben) stark reduziert ist. Genaugenommen gelten aber diese Prozesse nur für den Gleichgewichtsfall, d.h. alle Teilchen haben sich ausgerichtet und es gibt einen nennenswerten Durchtritt (Austauschstromdichte) durch die Doppelschichten. Obwohl solche kinetischen Effekte Forschungsgegenstand sind, bleibt ihre positive Ausnutzung als Teil eines dynamisch elektrischen Steuersystems ungenutzt.

Einige der heutigen Mikroreaktoren nutzen bereits elektrische Felder um Moleküle an bestimmte Ort zu bringen (DNA-Chips), bzw. diese daran zu hindern von einem Ort weg zu diffundieren. Diese Orte werden bereits vor dem Einsatz mittels bestimmter Substanzen, z.B. kurzer DNA-Stränge belegt, um auf Grund der Ortsinformation Schlüsse über die in der Flüssigkeit vorhandenen Stoffe zu bekommen. Aktive Bewegung von Molekülen in Lösungen sind beschrieben (z.B. Fuhr), aber bis jetzt in dieser Form noch nicht wirtschaftlich einsetzbar. Im Bereich der Elektrophorese in Mikrostrukturen gibt es viele Anstrengungen Molekülmischungen durch die behinderte Bewegung in Gelen aufzutrennen und damit bestimmte gesuchte Moleküle einer weiteren Bearbeitung verfügbar zu machen: hier werden die parallel geschalteten Reaktoren aber nicht individuell gesteuert. Weitere beschriebene Einsätze elektrischer Felder beziehen sich auf Elektroporation und die Sortierung von Zellen. In allen diesen Beispielen wird nur eine stark begrenzte Parallelität der Steuerung erreicht.

M. Heller (Proc. Natl. Acad. Sci. USA, Vol 94, pp 1119-1123 , February 1997) beschreibt elektrisch konfigurierbare DNA Chips mit elektrisch verbesserter Moleküldiskriminierung. Nachteile dieser DNA-Chips sind außer der geringen Elektrodenanzahl die begrenzte Lebensdauer der beschichteten Elektroden. Nachteile bei den bisher im Fluss aktiv bewegten Molekül-Prozessen sind auch die kleine Anzahl der Elektroden, typischerweise kleiner 100. Diese kleinen Zahlen resultieren daher, dass diese Elektroden mit genau eingestellten analogen Spannungspotentialen belegt werden, um a) eine optimale Traktion der Moleküle zu ermöglichen und b) die Bildung von Gasen durch Elektrolyse zu verhindern. Die dafür verwendeten Potentiostaten sind teuer und groß.

Neuere Versuche integrierter Elektronik für die Sensorik und Steuerung von BioChips zu verwenden (z.B. Infineon), sind durch die notwendigen komplexen Schaltkreise teuer und auch deshalb noch nicht so hochparallel wie in der Biotechnologie nötig.

### Aufgabe

Eine Aufgabe der Erfindung ist es, mit einer begrenzten Anzahl von Ansteuerleitungen eine wesentlich größere Zahl von Elektroden zwecks massiv-paralleler Steuerung von Molekülen in Mikrofluidik-Reaktionssystemen ansteuern zu können.

### Lösung

Zur Lösung dieser Aufgabe wird mit der Erfindung ein Mikrofluidik-System gemäß Anspruch 1 vorgeschlagen. Weiterbildungen der Erfindung sind Gegenstand der Unteransprüche.

Erfindungsgemäß wird also eine besondere Art der Anordnung von untereinander elektrisch verbundenen Elektroden vorgeschlagen, wobei jeder Gruppe von derartig untereinander verbundenen Elektroden ein Ausgang der Ansteuerungselektronik zugeordnet ist. Wird nun an diesem Ausgang ein Steuersignal ausgegeben, so liegt dieses an sämtlichen Elektroden dieser Gruppe an. Die Anordnung der Elektroden jeweils zweier Gruppen ist nun derart gewählt, dass beide Gruppen zusammen über mindestens ein Elektrodenpaar verfügen, bei der Abstand der Elektroden minimal ist. Werden nun beide Gruppen von Elektroden mit Steuersignalen beaufschlagt, so kommt es zwischen den Elektroden des zuvor besagten Elektrodenpaares zu einem elektrischen Feld, das eine ausreichende Stärke aufweist, um die gewünschte Manipulation (beispielsweise den Transport eines Moleküls) zu verursachen. Für all die anderen Elektrodenpaare dieser beiden Gruppen von Elektroden gilt, dass dann, wenn der Abstand der Elektroden der jeweiligen Paare größer ist als der Minimalabstand, das elektrische Feld lediglich eine Stärke aufweist, die zur Durchführung einer Manipulation nicht geeignet ist.

Durch geeignete Wahl der Flüssigkeitszusammensetzung (insbesondere die Ionen in der Flüssigkeit sind entscheidend) kann erreicht werden, dass sich das elektrische Feld in der Flüssigkeit lediglich zeitverzögert abbaut. D.h., das elektrische Feld besteht noch für eine gewisse Zeit nach Abschaltung der Steuersignale fort. Die Folge, mit denen die impulsförmigen Steuersignale an unterschiedlichen Ausgängen der Ansteuerelektronik aufeinander folgen, kann nun kürzer als die Relaxationszeit des elektrischen Feldes gewählt werden. Auf diese Weise entsteht eine zeitgemultiplexte Ansteuerung einzelner Elektrodenpaare und somit eine quasi parallele Manipulation mehrerer Moleküle innerhalb des Mikrofluidik-Systems, wodurch insgesamt eine (bei entsprechender Skalierung) größere Mengen von Molekülen eines oder mehrerer Typen massiv parallel gesteuert werden kann.

### Grundzüge des Lösungsweges

a) Digitalspannung
   Der Ausgang eines digitalen Bausteins kann in der Regel nur die drei Zustände 0, 1, tristate -> Z, also etwa 0 Volt, 3,3 oder 5 Volt (V_{cc}) oder hochohmig (inaktiv) annehmen. Die Ansteuerung eines Elektrodenpaares in einer Lösung mit geladenen Molekülen stellt jedoch elektrisch gesehen eine Anordnung aus zumindest Widerständen (die Leitung erfolgt mittels in der Flüssigkeit vorhandener Ladungsträger, in der Regel Ionen) und Kondensatoren (es können sich lokale Grenzschichten aufbauen, die dann die schon vorhandenen Kapazitäten zusätzlich noch erhöhen) dar. Diese Tatsache führt dazu, das durch das zeitlich richtige Ein- und Ausschalten der digitalen Ausgänge an den Elektroden quasi jede gewünschte Spannung zur Steuerung der Moleküle einstellbar ist (Tiefpassverhalten, D/A-Wandler). Durch Ausnutzen dieses Effektes reduziert sich der technische Aufwand zur Ansteuerung um ein Wesentliches. Das real wirkende elektrische Feld zwischen zwei derart angesteuerten Elektroden kann also in Stärke und Richtung nahezu beliebig zwischen null und dem Maximum variieren. Dementsprechend ist auch die Wirkung des Feldes auf die Moleküle nahezu beliebig einstellbar.
b) Auf Grund der Eigenladung der Moleküle bzw. der anhaftenden Ladungsträger sind die Kräfte die auf diese Moleküle ausgeübt werden können umso größer, je größer die von den Molekülen wahrgenommenen Feldstärken sind. Die maximalen Feldstärken sind allerdings durch die Trennung von Wassermolekülen in seine Bestandteil begrenzt. Allerdings ermöglichen pulsierende Felder (das eigentliche Feld liegt nur kurze Zeit an den Elektroden an) die Moleküle trotzdem mit höheren Feldstärken anzutreiben. Das Tastverhältnis (duty-cycle) ist einstellbar. Dadurch wird bei entsprechender Einstellung eine Gasblasenbildung an den Elektroden vermieden. Das auf Grund von Elektrolyse doch noch entstehende Gas hat Zeit, von den Elektroden in die Lösung abzudiffundieren und stört nicht weiter. Für die Konstruktion der Elektrodengeometrien haben dabei die Inhomogenitäten, die an den Kanten der Elektroden entstehen, den positiven Effekt, dass die Spannungen sehr klein und damit im Bereich der durch heutige Digitaltechnik gegebenen Spannungsniveaus von V_{cc} bleiben können.
c) 2-dimensionaler Elektrodenzeitmultiplex
   Durch die Verwendung hochintegrierter kommerzieller Digitalbausteine mit mehreren hundert Ausgangstreibern (n Ausgangstreibern) wird es nun möglich, Elektrodenbündel in der Größenordnung von n² unabhängig voneinander anzusteuern und damit mehrere tausend Reaktionskammern willkürlich mit Molekülen zu versorgen, bzw. diese aus den Reaktionskammern zu entfernen. Dabei spielt es keine Rolle, ob diese Reaktionskammern als räumliche Kammern ausgebildet sind oder nur räumlich-temporär in sich bewegenden Flüssigkeitsströmen entstehen. Auf Grund der sich ausbildenden ionischen Doppelschichten und der damit verbundenen Feldabschirmungen ist es möglich, die Elektrodenansteuerungen zeitlich so zu verschachteln (ähnlich den Ringkernspeichern aus den frühen Jahren der Computertechnik), dass mehrere tausend Elektroden betrieben werden können, obwohl nur ein paar hundert aktive Treiber von Digitalbausteinen vorhanden sind. Für ein 100x100 Feld von Elektroden werden mit dieser Methode lediglich 200 aktive getriebene Leitungen benötigt. Lediglich dort, wo Elektroden zweier Elektrodenreihenschaltungen, die an zwei unterschiedlichen Treiberausgängen angeschlossen sind, nahe benachbart zueinander angeordnet sind (für jeweils zwei Elektrodenreihenschaltungen existiert diese Situation zumindest für ein Elektrodenpaar), sind die Felder (z.B. auf Grund der Inhomogenitäten an den Kanten der Elektroden) stark genug, um die dort lokal sich befindenden Moleküle zu bewegen. Die Relaxationszeit der Doppelschicht kann je nach Pufferlösung im Bereich von Millisekunden liegen. Dann erst ist das Elektrodenpotential abgebaut bzw. aufgebaut. Folglich können innerhalb solcher Zeiten andere Elektroden für Teilchentransport oder -manipulation angesprochen werden (Multiplexing). Die in Lösung befindlichen Teilchensorten des Puffers werden dabei der Aufgabe entsprechend zusammengestellt.
d) Direkte Integration von Logikelementen unter die Elektroden

Je nach Vorhandensein der Technologie bzw. ausreichend niedriger Kosten, können die Ausgangstreiber der digitalen Bausteine direkt in das Trägermaterial integriert werden. Dies liegt besonders dann nahe, wenn Silizium als Trägermaterial verwendet wird. Die für die zusätzliche Logik inklusive der entsprechenden Treiber notwendige Siliziumfläche kann bequem unter den Elektroden bereitgestellt werden. Mittels ausgefeilter Bustopologien und Mischhierarchien, z.B. eine kleine Fläche wird mit dem oben beschriebenden Multiplexverfahren angesteuert und viele dieser kleinen Flächen werden auf dem ganzen Modul verteilt, kann der Integrationsgrad sogar noch weiter gesteigert werden. Allerdings muss damit gerechnet werden, dass diese mikrostrukturierten Bioreaktoren Wegwerfartikel sind und von daher in der Herstellung kostengünstig sein sollten.

### Verbesserungen und Vorteile gegenüber dem Stand der Technik

Die mit der Erfindung erzielbaren Vorteile beziehen sich auf die nun mögliche massiv-parallele Integration tausender von Elektroden und damit die Verfügbarmachung kombinatorischer Vielfalt bei den Reaktionswegen. Erstens erlaubt die beschriebene Erfindung, innerhalb eines Mikrofluidik-Systems eine Vielzahl (10³ - 10⁶) verschiedener Reaktionen oder Trennverfahren parallel und unabhängig voneinander gesteuert zu fahren. Außer für diese direkte massiveparallele Reaktionssteuerung, kann die hochparallele Elektrodensteuerung genutzt werden, um ein Mikrofluidik-System für verschiedene Zwecke zu konfigurieren, d.h. zu programmieren. Weiterhin muss die gewünschte Molekülverarbeitung nicht im voraus bekannt und nicht für alle Proben gleich sein, sondern kann von Zwischenresultaten abhängig bemacht werden. Durch den nun möglichen Aufbau von Tausenden unabhängig gesteuerter Elektroden ergeben sich neue Anwendungsfelder chemischer oder biochemischer Reaktionssysteme, z.B. in der Analytik und Wirkstoffsynthese. Diese Vielfalt von Reaktionswegen kann unter klassischen Bedingungen in Mikrostrukturen nicht realisiert werden, da eine individuelle Flusssteuerung auf Grund der dafür notwendigen vergleichsweise großen Ventile nicht möglich ist. Durch diese massive Parallelität wird Biochemie programmierbar und sämtliche Werkzeuge der Informatik (z.B. Datenflussarchitekturen) werden auch für direkte chemische Umsetzung nutzbar.
1. Man arbeitet mit individuell gepulsten "digitalen Feldern".
2. Die Puls- und Tastverhältnisse lassen sich an die Teilchensorten anpassen, so dass "elektrische Filter" und "Verstärker" herstellbar sind, die es erlauben, bestimmte Teilchenarten bevorzugt zu transportieren.
3. Die Felder lassen sich je nach Elektrodendesign und Feldstärke sehr inhomogen gestalten, so dass auch Moleküle mit überwiegenden Dipoleigenschaften transportiert und manipuliert werden können.
4. Dauer, Frequenzen und Tastverhältnisse der angelegten Digitalpotentiale erlauben nicht nur das Vermeiden von Elektrolyseerscheinungen an den Elektroden, sondern auch den o.g. Multiplexbetrieb, und zwar auf Grund des Relaxationsverhaltens von mobilen Ladungsträgern in der Lösung.

### Ausführungsbeispiel

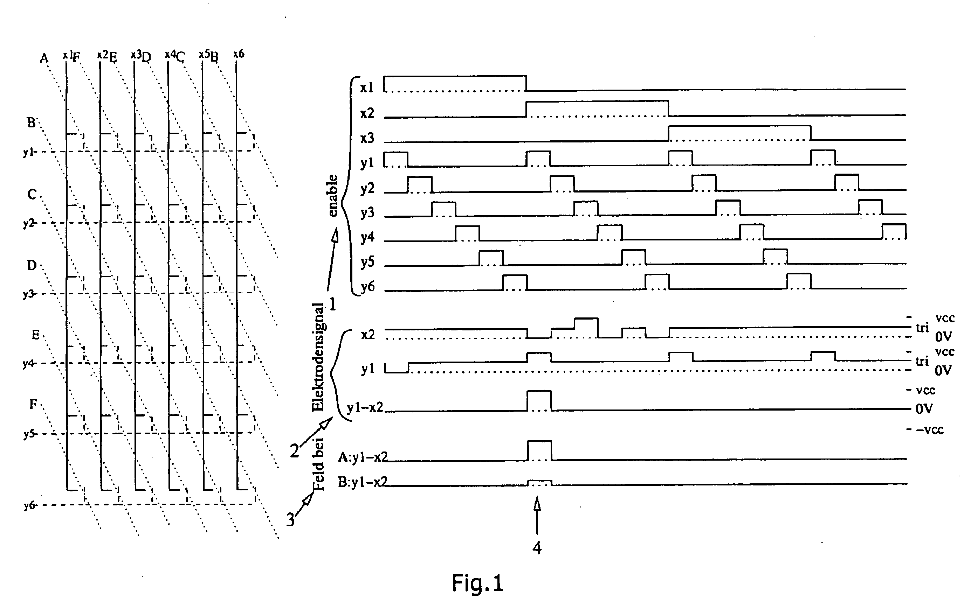

In Fig. 1, linker Teil, ist eine Matrix mit jeweils sechs Leiterbahnen in x- und y-Richtung gezeigt (x1-x6 und y1-y6). Diagonal über die damit angesteuerten 36 Elektroden können Flüssigkeitskanäle gelegt werden. Die Elektroden werden mit Rechteckimpulsen belegt. Mehrere im Flüssigkeitskanal verteilte Referenzelektroden werden mit einer höherfrequenten Rechteckspannung belegt, die dergestalt ist, dass das mittlere Spannungsniveau z.B. genau bei V_{cc}/2 eingestellt wird. Durch diese Arbeitspunkteinstellung ist es möglich, mit nur zwei Spannungen (0V und V_{cc}) verschiedene Differenzspannungen zu erzeugen. Durch geschickte Abfolge der Impulse ist es so möglich, geladene Moleküle gezielt durch An- und Abstoßung zu bewegen. Rechts ist eine mögliche Impulsfolge gezeigt, mit der die Elektroden einzelne angesteuert werden können. Wie schon oben angedeutet spielt das elektrische Verhalten der Flüssigkeiten in der Mikrostruktur eine entscheidende Rolle bei der Ausnutzung der Relaxationseigenschaften der ionischen Doppelschichten (ca. 10-20ms). Ohne diese Doppelschichten liegen die typischen Relaxationszeiten im Nanosekundenbereich und sind damit zu kurz für die Ausnutzung des Effektes.

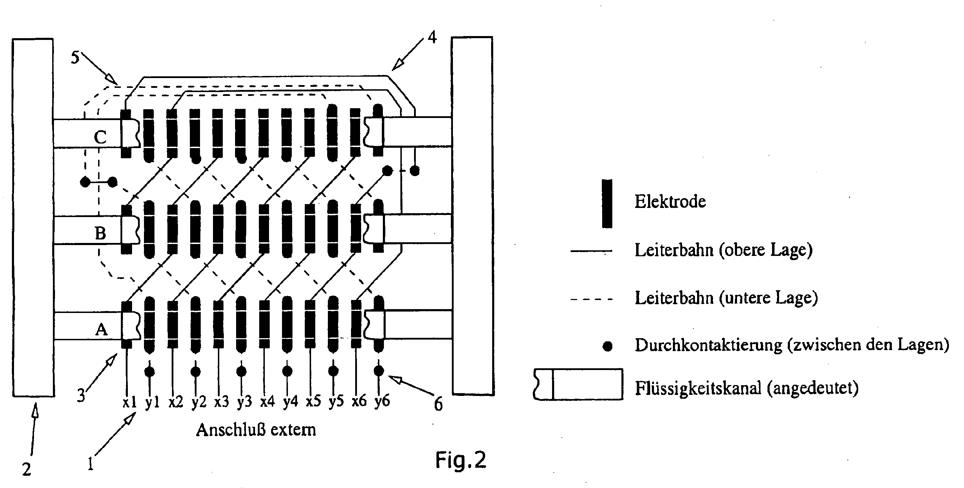

Eine mögliche Realisierung des oben gezeigten zweidimensionalen Arrays ist in Fig. 2 dargestellt. Die Elektroden sind diagonal verbunden, um waagrechte und vertikale Kanalstrukturen zu erlauben. Die Elektrodenverbindungen sind derart konstruiert, dass Elektroden, wenn sie nicht direkt benachbart sind, mindestens vier Elektroden auseinander liegen. Die Felder, die dann über die vier Elektroden hinweg wirken, können auf Grund der starken Abnahme der Feldstärken vernachlässigt werden. Zusätzlich kann durch eine geschickte Ansteuerung in vielen Fällen erreicht werden, dass selbst die entfernter liegenden Elektrodenpaare zwar aktiv sind, aber auf Grund fehlender Moleküle keinerlei Einfluss haben. Trotzdem muss natürlich gesagt werden, dass die sinnvolle Anzahl gleichzeitig aktiver Elektrodenpaare sehr viel kleiner als x*y sein muss, da sonst die Kräfte die auf die Biomoleküle integral ausgeübt werden können, zu klein werden.

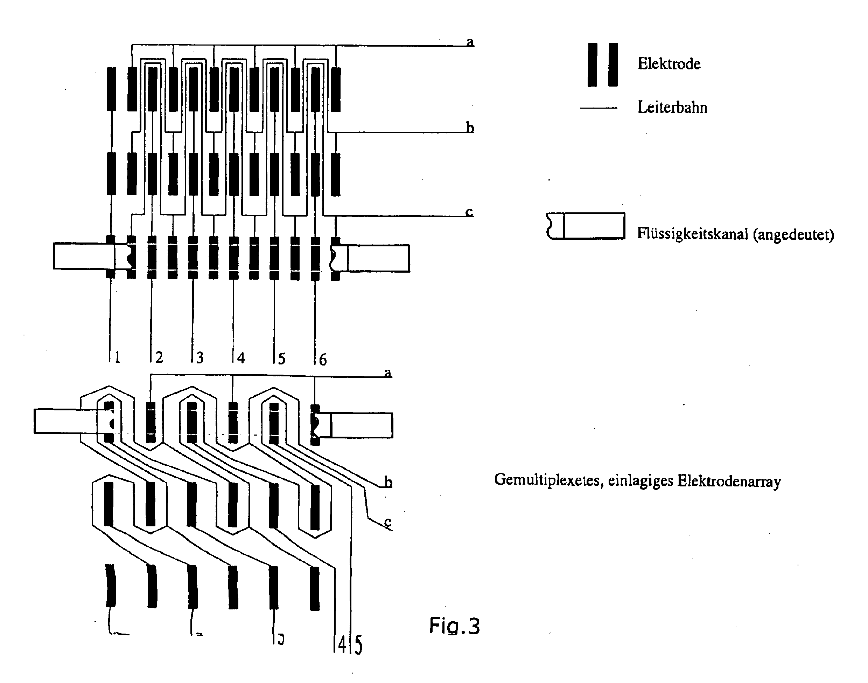

Das in Fig. 2 gezeigte Design setzt allerdings voraus, dass es möglich ist, eine zweilagige Leiterbahnführung zu gewähren. Es spielt keine Rolle, ob diese beiden Lagen auf ein und derselben Seite des Grundmaterials (z.B. Silizium) ist oder auf jeder Seite eine Lage mit den entsprechenden Durchkontaktierungen vorhanden ist. Für den Fall, dass nur eine einlagige Leiterbahnführung möglich ist, ist in Fig. 3 ein Testbeispiel dargestellt. Allerdings leidet die Skalierbarkeit erheblich mit dieser Beschränkung auf einlagige Leiterbahnführung und ist sinnvoll nur in einer Dimension durchführbar.

## Patentansprüche

1. Elektrisches Mikrofluidik-Multiplex-System mit
- mindestens einem Kanal für Flüssigkeitsströme, der mittels elektrischer Felder zu manipulierende und insbesondere zu transportierende Moleküle, insbesondere Biomoleküle, Molekülkomplexe oder Mikropartikel aufweist,
- einer Vielzahl von Elektroden, die entlang des mindestens einen Kanals einzeln oder in Gruppen aufeinander folgend angeordnet sind,
- einer Ansteuerelektronik mit mehreren Ausgängen für an die Elektroden anzulegende Steuersignale, wobei
- die Elektroden in Gruppen unterteilt sind,
- jede Gruppe einem Ausgang der Ansteuerelektronik zugeordnet ist,
- die Elektroden jeder Gruppe galvanisch untereinander verbunden und an dem jeweils zugeordneten Ausgang der Ansteuerelektronik angeschlossen sind,
- die untereinander verbundenen Elektroden jeweils zweier Gruppen derart positioniert sind, dass mit Ausnahme mindestens einer Elektrode der einen Gruppe sämtliche Elektroden dieser Gruppe jeweils einen derart großen Abstand von den Elektroden der anderen Gruppe aufweisen, dass bei Anlegen von Steuersignalen an die beiden Gruppen von Elektroden ausschließlich zwischen den jeweiligen mindestens einen Elektroden beider Gruppen mit minimalem Abstand ein für eine Manipulation eines Moleküls, Molekülkomplexes oder Mikropartikels ausreichendes elektrisches Feld aufbaubar ist d.h. wenn man zwei beliebige Elektrodengruppen betrachtet, sind, wenn gewünscht nur ein Paar von Elektroden, bestehend aus je einer Elektrode der beiden Gruppen, hinreichend nahe positioniert, um einen wesentlichen Effekt auszuüben, und
- die Steuersignale Impulssignale sind und dass die Aufeinanderfolge der Impulse der Steuersignale an unterschiedlichen Ausgängen in der Regel kleiner als die Relaxationszeit des Abbaus des elektrischen Feldes in der Flüssigkeit zwischen zwei Elektroden ist.

2. Elektrisches Mikrofluidik-Multiplex-System nach Anspruch 1, **dadurch gekennzeichnet, dass** während der Dauer des Anlegens von Steuersignalen an die Elektroden zweier Gruppen an die Elektroden derjenigen weiteren Gruppe, zu der eine Elektrode gehört, welche zwischen zwei jeweils den beiden anderen Gruppen zugeordnete Elektroden positioniert ist, mindestens ein weiteres Steuersignal anlegbar ist, dass eine unerwünschte Wechselwirkung dieser beiden Elektroden, zwischen denen die Elektrode der weiteren Gruppe positioniert ist, unterdrückt wird.

3. Elektrisches Mikrofluidik-Multiplex-System nach einem der Ansprüche 1 bis 2, **dadurch gekennzeichnet, dass** die Elektroden der einzelnen Gruppen untereinander in Reihe und/oder parallel oder teilweise in Reihe und/oder parallel geschaltet sind.

4. Elektrisches Mikrofluidik-Multiplex-System nach einem der Ansprüche 1 bis 3, **dadurch gekennzeichnet, dass** auf elektrischem Wege rekonfigurierbare Mikrofluidiknetzwerke implementierbar sind.

5. Verwendung des Systems nach einem der Ansprüche 1 bis 4 mit diskreten vorgegebenen Pulsfolgen auf die Elektroden zur Emulation kontinuierlicher Spannungswerte vermittels der spezifischen elektrochemischen Gegebenheiten in einer Mikrofluidikstruktur bei dem insbesondere die Relaxationszeiten von Ionen-Bewegungen und Polarisationsereignisse in der Lösung elektrisch mitbenutzt werden.

6. Verwendung des Systems nach einem der Ansprüche 1 bis 4 mit diskreten vorgegebenen Pulsfolgen auf geeignet angebrachten Elektroden zur Erzeugung von durch elektrische Felder gegebenen, gegen Molekülein- oder -ausfluss geschützten Reaktionsbereichen oder Gruppen davon in der Mikrofluidikstruktur.

7. Verwendung des Systems nach einem der Ansprüche 1 bis 4 zur Etablierung von Molekülfiltern, selektiven Sperren, etc. unter Ausnutzung der verschiedenartigen Reaktion unterschiedlicher Molekültypen auf elektrische Felder.

8. Verwendung des Systems nach einem der Ansprüche 1 bis 4 zur Aufrechterhaltung der Funktionstüchtigkeit der Elektroden in der Mikrofluidikstruktur gegen elektrochemische Prozesse.

9. Verwendung des Systems nach einem der Ansprüche 1 bis 4 für den Aufbau von Molekulardiagnostiksystemen, die Steuerung der automatischen Suche nach pharmazeutischen Wirkstoffen, "Lab-on-a-Chip"-Analytik, molekulares Computing, Genexpressionsanalyse.

## Claims

1. An electric microfluidics multiplex system comprising
at least one channel for liquid flows, comprising molecules, particularly biomolecules, molecule complexes or microparticles adapted to be manipulated and particularly to be transported by electric fields,
a plurality of electrodes arranged to follow each other individually or in groups along the at least one channel,
drive electronics comprising a plurality of outputs for control signals to be applied to the electrodes, wherein
the electrodes are divided into groups,
each group is assigned to an output of the drive electronics,
the electrodes of each group are galvanically interconnected and are connected to the respective assigned output of the drive electronics,
the interconnected electrodes of respectively two groups are positioned in such a manner that, except for at least one electrode of one group, all electrodes of this group are respectively arranged at such a large distance from the electrodes of the other group that, when control signals are applied to the two groups of electrodes, an electric field which is sufficient for the manipulation of a molecule, molecule complex or microparticle can be built up, with minimum distance, exclusively between the respective at least one electrodes of both groups, i.e. if required, when viewing two random electrode groups, only one pair of electrodes comprising respectively one electrode of the two groups, is positioned sufficiently dose to exert a substantial effect, and
the control signals are pulse signals and the succession of the pulses of the control signals at different outputs is normally smaller than the relaxation time of the reduction of the electric field in the liquid between two electrodes.

2. The electric microfluidics multiplex system according to claim 1, **characterized in that,** for the duration of the applying of control signals to the electrodes of two groups, at least one further control signal can be applied to the electrodes of that further group which includes an electrode that is positioned between two electrodes respectively assigned to the two other groups, such that an undesired interaction between these two electrodes having the electrode of the further group positioned therebetween is suppressed.

3. The electric microfluidics multiplex system according to any one of claims 1 to 2, **characterized in that** the electrodes of the individual groups are connected in series and/or in parallel or partially in series and/or in parallel.

4. The electric microfluidics multiplex system according to any one of claims 1 to 3, **characterized in that** microfluidics networks, adapted to be reconfigured electrically, can be implemented.

5. Use of the system according to any one of claims 1 to 4, with discrete predetermined pulse sequences to be applied to the electrodes for emulation of continuous voltage values by means of the specific electrochemical conditions in a microfluidics structure, wherein particularly also the relaxation times of ion movements and polarization results in the solution are electrically used.

6. Use of the system according to any one of claims 1 to 4 with discrete predetermined pulse sequences applied to suitably arranged electrodes for generating, in the microfluidics structure, reaction regions or groups thereof which are caused by electric fields and protected from inflow and outflow of molecules.

7. Use of the system according to any one of claims 1 to 4 for generating molecule filters, selective barriers etc. by use of the different reactions of different molecule types to electric Fields.

8. Use of the system according to any one of claims 1 to 4 for maintaining the functionality of the electrodes in the microfluidics structure against electrochemical processes.

9. Use of the system according to any one of claims 1 to 4 for the establishing of molecular diagnostics systems, the control of the automatic search for pharmaceutical agents, "Lab-on-a-Chip" analytics, molecular computing, gene expression analysis.

## Revendications

1. Système électrique multiplex et microfluidique comprenant
- au moins un canal pour courants de fluide, qui présente des molécules, en particulier des biomolécules, complexes moléculaires ou microparticules à manipuler et, en particulier, à transporter au moyen de champs électriques,
- une pluralité d'électrodes qui sont disposées successivement le long dudit au moins un canal, individuellement ou en groupes,
- une électronique de commande comportant plusieurs sorties pour des signaux de commande à appliquer aux électrodes,
- les électrodes étant subdivisées en groupes,
- chaque groupe étant associé à une sortie de l'électronique de commande,
- les électrodes de chaque groupe étant reliées galvaniquement entre elles et raccordées à la sortie respectivement associée de l'électronique de commande,
- les électrodes de respectivement deux groupes, reliées entre elles, étant positionnées de telle façon qu'à l'exception d'au moins une électrode de l'un des groupes, toutes les électrodes de ce groupe présentent chacune une distance telle par rapport aux électrodes de l'autre groupe que, lors de l'application de signaux de commande sur les deux groupes d'électrodes, un champ électrique suffisant pour une manipulation d'une molécule, d'un complexe moléculaire ou d'une microparticule ne peut être établi qu'entre chacune desdites au moins une électrode des deux groupes ayant une distance minimale, c'est-à-dire que, considérant deux groupes d'électrodes quelconques, si désiré, seule une paire d'électrodes constituée d'une électrode de chacun des deux groupes est positionnée avec une proximité suffisante pour exercer un effet sensible, et
- les signaux de commande étant des signaux d'impulsion et la séquence des impulsions des signaux de commande sur différentes sorties étant, en général, plus petite que le temps de relaxation de la diminution du champ électrique dans le fluide entre deux électrodes.

2. Système électrique multiplex et microfluidique selon la revendication 1, **caractérisé en ce que,** pendant la durée d'application de signaux de commande sur les électrodes de deux groupes, au moins un autre signal de commande peut être appliqué sur les électrodes de l'autre groupe auquel appartient une électrode qui est positionnée entre deux électrodes associées à chacun des deux autres groupes, de sorte qu'une interaction indésirable de ces deux électrodes entre lesquelles est positionnée l'électrode de l'autre groupe, est supprimée.

3. Système électrique multiplex et microfluidique selon l'une des revendications 1 à 2, **caractérisé en ce que** les électrodes des différents groupes sont connectées entre elles en série et/ou en parallèle ou partiellement en série et/ou en parallèle.

4. Système électrique multiplex et microfluidique selon l'une des revendications 1 à 3, **caractérisé en ce que** des réseaux microfluidiques reconfigurables par voie électrique peuvent être mis en oeuvre.

5. Utilisation du système selon l'une des revendications 1 à 4, avec des trains d'impulsions discrets prédéterminés sur les électrodes pour émulation de valeurs de tension continues au moyen des données électrochimiques spécifiques dans une structure microfluidique, dans laquelle, en particulier, les temps de relaxation de mouvements ioniques et événements de polarisation sont partagés électriquement dans la solution.

6. Utilisation du système selon l'une des revendications 1 à 4, avec des trains d'impulsions discrets prédéterminés sur des électrodes disposées de manière appropriée pour générer des régions de réaction, ou groupes de celles-ci, fournies par des champs électriques et protégées contre l'entrée ou la sortie de molécules, dans la structure microfluidique.

7. Utilisation du système selon l'une des revendications 1 à 4, pour l'établissement de filtres à molécules, bloqueurs sélectifs, etc. en utilisant la réaction hétérogène de différents types de molécules sur des champs électriques.

8. Utilisation du système selon l'une des revendications 1 à 4, pour le maintien de la capacité de fonctionnement des électrodes dans la structure microfluidique face à des processus électrochimiques.

9. Utilisation du système selon l'une des revendications 1 à 4, pour l'élaboration de systèmes de diagnostic moléculaires, la commande de recherche automatique de substances actives pharmaceutiques, l'analytique des laboratoires sur puces, le calcul moléculaire, l'analyse de l'expression de gènes.
